Europäisches Patentamt

European Patent Office

Office européen des brevets

(19)

(11) Veröffentlichungsnummer: **0 140 836 B1**

(12) **EUROPÄISCHE PATENTSCHRIFT**

(45) Veröffentlichungstag der Patentschrift: **12.06.91**

(21) Anmeldenummer: **84810491.5**

(22) Anmeldetag: **09.10.84**

(51) Int. Cl.5: **G02B 21/22**

(54) **Optisches Gerät zum Erzeugen eines visuellen stereoskopischen Bildes.**

(30) Priorität: **03.11.83 CH 5937/83**

(43) Veröffentlichungstag der Anmeldung:
**08.05.85 Patentblatt 85/19**

(45) Bekanntmachung des Hinweises auf die
Patenterteilung:
**12.06.91 Patentblatt 91/24**

(84) Benannte Vertragsstaaten:
**AT BE CH DE FR GB IT LI NL SE**

(56) Entgegenhaltungen:
**EP-A- 0 072 652**
**CH-A- 516 176**
**DE-A- 431 083**
**GB-A- 851 404**

(73) Patentinhaber: **Projectina AG Heerbrugg**
**Dammstrasse 2**
**CH-9435 Heerbrugg(CH)**

(72) Erfinder: **Wirz, Paul**
**Hangetweg 5**
**CH-9434 Au(CH)**
Erfinder: **Draxl, Johann**
**Gemperen 1566**
**CH-9442 Berneck(CH)**

(74) Vertreter: **Wenger, René et al**
**Hepp & Partner AG Marktgasse 18**
**CH-9500 Wil(CH)**

## Beschreibung

Die Erfindung bezieht sich auf ein optisches Gerät gemäss dem Oberbegriff von Patentanspruch 1. Das räumliche Sehen ist für viele Kontrollvorgänge in der Industrie von grosser Bedeutung. So werden derartige Geräte beispielsweise zur Kontrolle von Lötstellen auf gedruckten Schaltungen eingesetzt. Im Gegensatz zu normalen Stereomikroskopen ist die Austrittspupille stark erweitert, sodass das Auge des Betrachters sich nicht in einer genau definierten Lage befinden muss, um das Bild beobachten zu können. Die betrachtende Person muss dabei nicht wie bei konventionellen Stereomikroskopen während längerer Zeit in zwei getrennte Okulartuben hineinschauen. Dies bietet ergonomische Vorteile und führt zudem weniger rasch zur Ermüdung der Augen.

Durch das Schweizer Patent Nr. 619 791 ist ein Vergrösserungsgerät der eingangs genannten Art bekannt geworden, bei dem die Pupillenaufteilung über ein herkömmliches stereoskopisches Objektivlinsensystem nach dem Greenough-Prinzip erfolgt. Die beiden getrennten Strahlenbündel werden über einen Spiegelkomplex und durch ein paar Projektionslinsensysteme auf eine Zwischenbildebene fokussiert. In der Zwischenbildebene ist ein Paar transparenter, mit Rillen versehener Scheiben angeordnet. Die Scheiben werden rotiert, sodass die einzelnen Rillen infolge der Streuwirkung vergrösserte Austrittspupillen erzeugen. Der Betrachter sieht in der Zwischenbildebene ein auf den transparenten Scheiben materialisiertes Bild. Der Nachteil dieser Vorrichtung besteht in der reduzierten Bildqualität. Durch die Bildlagefixierung auf der Drehscheibe ist die Tiefenschärfe begrenzt. Ausserdem tritt bei längerer Beobachtung eine Ermüdung der Augen ein, da sich ein leichtes Flimmern des Bildes nicht vermeiden lässt. Das dynamische System mit der rotierenden Scheibe ist zudem störanfällig, da das Bild beim Ausfallen des Antriebs nicht betrachtet werden kann.

Ein ganz ähnliches System ist auch bereits durch die CH-A 516 176 bekanntgeworden. Auch dort wird die Abbildung in der Kreuzungsebene der beiden Strahlenbündel auf einer Streuscheibe materialisiert. Die Objektivpupillen werden in der Gegend der entsprechenden Augenpupillen des Beobachters unscharf abgebildet. Die Streuscheibe führt jedoch ebenfalls zu einer unerwünschten Beeinträchtigung der Bildqualität. Der Betrachtungsabstand muss dem Augenabstand des Beobachters angepasst werden, was ergonomisch ebenfalls nicht vorteilhaft ist.

Es sind auch bereits Stereobetrachtungsgeräte bekannt, bei denen die Pupillentrennung durch gekreuzte Polarisation vorgenommen wird. Strahlen, welche durch Parallelstellung der Polarisatoren dem einen Auge zugewiesen werden, sind durch die gekreuzte Stellung der Polarisatoren für das andere Auge gesperrt. Dieses Prinzip hat den grossen Nachteil der Bildverdunkelung durch die dichroitischen Polarisatoren. Im günstigsten Falle werden nur noch 30% Licht durchgelassen. Es wird dadurch eine unverhältnismässig grosse Lampenleistung erfordert, was auch zu einem relativ hohen Energieverbrauch führt.

Es ist daher Aufgabe der Erfindung ein Gerät der eingangs genannten Art zu schaffen, welches die Nachteile der bekannten Geräte vermeidet und insbesondere bei Verstärkung des Stereoeffektes vergrösserte Austrittspupillen erzeugt, ohne dass dabei die Bildqualität und die Tiefenschärfe vermindert wird. Eine weitere Aufgabe der Erfindung besteht darin, dass das Gerät von jedem Betrachter auf seine individuellen Bedürfnisse eingestellt werden kann, d.h. insbesondere dass der interpupillare Abstand der Austrittspupillen auf einfachste Weise justierbar ist.

Diese Aufgabe wird erfindungsgemäss durch eine Vorrichtung gelöst, welche das Merkmal im Kennzeichen vom Patentanspruch 1 aufweist. Durch die in der Zwischenbildebene angeordnete Feldlinse kann ein nicht materialisiertes Luftbild betrachtet werden. Dadurch kann der volle Akkommodationsspielraum der Augen für die Tiefenwahrnehmung eingesetzt werden. Die Tiefenschärfe vergrössert sich mit zunehmender Helligkeit, da die Abbildungsgeometrie durch die Grösse der Augenpupillen gesteuert wird. Die Feldlinse hat zudem den Vorteil, dass keine oder nur begrenzte Lichtverluste durch diffuse Streuung entstehen.

Ein besonderer Bedienungskomfort ergibt sich, wenn zum Zusammenführen der beiden Strahlenbündel auf der Zwischenbildebene eine Spiegelvorrichtung vorgesehen ist, auf welche die beiden Strahlenbündel auftreffen und wenn die Spiegelvorrichtung für jedes Strahlenbündel einen festen Spiegel aufweist, mit dem es auf einen verschwenkbaren Spiegel umlenkbar ist und wenn ferner die Distanz zwischen den zwei verschwenkbaren Spiegeln zum Anpassen der Austrittspupillen an den Augenabstand des Betrachters justierbar ist. Auf diese Weise sind die Austrittspupillen nicht fest auf einen durchschnittlichen interpupillaren Abstand des Betrachters eingestellt. Vielmehr kann jeder Betrachter über einen einfachen Verstellmechanismus den optimalen Pupillenabstand einstellen.

Besonders einfach lässt sich die Spiegelvorrichtung realisieren, wenn die beiden verschwenkbaren Spiegel je einen Schwenkhebel aufweisen, der an einer Kurvenscheibe zum Verschwenken des Hebels anliegt und wenn jeder der schwenkbaren Hebel mit einer Feder an die Kurvenscheibe anpressbar ist. Je nach der Länge des Hebelarmes des Schwenkhebels und nach der Neigung der Oberfläche der Kurvenscheibe lässt sich dadurch eine äusserst präzise Justierung der optischen Achsen gewährleisten.

Wenn die beiden Kurvenscheiben auf einer gemeinsamen Drehachse liegen und wenn die beiden Schwenkhebel mit einer Zugfeder verbunden bzw. gegen die Kurvenscheiben pressbar sind, ist eine absolut gleichförmige Bewegung der beiden schwenkbaren Spiegel gewährleistet.

Da sich beim Verschwenken der beiden Spiegel ersichtlicherweise auch der Kreuzungspunkt der optischen Achsen in der Zwischenbildebene verändert, ist eine zusätzliche bzw. gleichzeitige Justierung eines weiteren Elements nötig. Vorteilhaft erfolgt diese Korrektur ebenfalls in der Spiegelvorrichtung auf besonders einfache Weise dadurch, dass die festen Spiegel auf einem Schlitten längs der Mittelachse zwischen den beiden verschwenkbaren Spiegeln verschiebbar sind, und dass der Schlitten mittels der Drehachse gleichzeitig mit den verschwenkbaren Spiegeln verschiebbar ist. Lichtverluste können dadurch beseitigt werden, dass die Pupillenaufteilung über ein Spiegelpaar erfolgt, welches Strahlen von einem Hauptobjektiv empfängt, wobei das Spiegelpaar zwei getrennte Strahlenbündel auf nachfolgende Linsen bzw. auf die Spiegelvorrichtung wirft. Es erfolgt eine geometrische Pupillenaufteilung mit getrennten optischen Achsen.

Wenn sich der zu beobachtende Gegenstand in der Ebene des Dingseitigen Fokus des Hauptobjektivs 2 befindet, so erzeugt das Hauptobjektiv ein Bild im unendlichen, die Strahlenbündel zwischen dem Hauptobjektiv 2 und dem Zwischenobjektivsystem 5, 5' sind dann parallel. Zum Fokussieren kann damit das Hauptobjektiv längs seiner zentralen optischen Achse verschoben werden, ohne dass sich dabei der Abbildungsmassstab des Gesamtsystems ändert. Die Lage der Zwischenbildebene 11 bleibt konstant.

Ein weiterer Bedienungskomfort ergibt sich, wenn die Strahlenaustrittslinse und die Feldlinse in einem Gehäuse angeordnet sind, dessen Längsachse verschwenkbar ist und wenn in den Strahlenbündeln zwischen der Spiegelvorrichtung und der Feldlinse wenigstens ein verschwenkbarer Spiegel vorgesehen ist. Dadurch kann der Betrachter den Austrittswinkel der Strahlen seiner Körperhaltung individuell anpassen. Der verschwenkbare Spiegel sorgt für eine geometrisch richtige Umlenkung der Strahlenbündel je nach dem relativen Winkel der Ausfallachse.

Die Austrittspupille kann noch dadurch vergrössert werden, dass wenigstens eine Seite der Feldlinse zum Erzielen einer geringen Streuwirkung eine feine und durchsichtige Oberflächenstruktur aufweist. Diese Oberflächenstruktur kann beispielsweise durch eine aufgetragene Emulsion bewirkt werden. Die Emulsion kann beispielsweise ein klarer Lack sein, der beim Trocknen eine unregelmässige Oberfläche erhält. Durch die Oberflächenstruktur tritt keine Materialisierung des Bildes ein, sodass die Qualität des Luftbildes in der Zwischenbildebene nicht beeinträchtigt wird.

Ein Ausführungsbeispiel der Erfindung ist in den Zeichnungen dargestellt und wird nachstehend genauer beschrieben: Es zeigen:

Figur 1   eine schematische Darstellung der erfindungsgemässen Vorrichtung,

Figur 2   eine schematische Darstellung des Strahlenverlaufs, welche die Gesetzmässigkeit des interpupillaren Abstandes darstellt,

Figur 3   eine Draufsicht auf die Spiegelvorrichtung,

Figur 4   einen Teilquerschnitt durch die Ebene D-D von Figur 3,

Figur 5   eine stark vereinfachte Seitenansicht der erfindungsgemässen Vorrichtung.

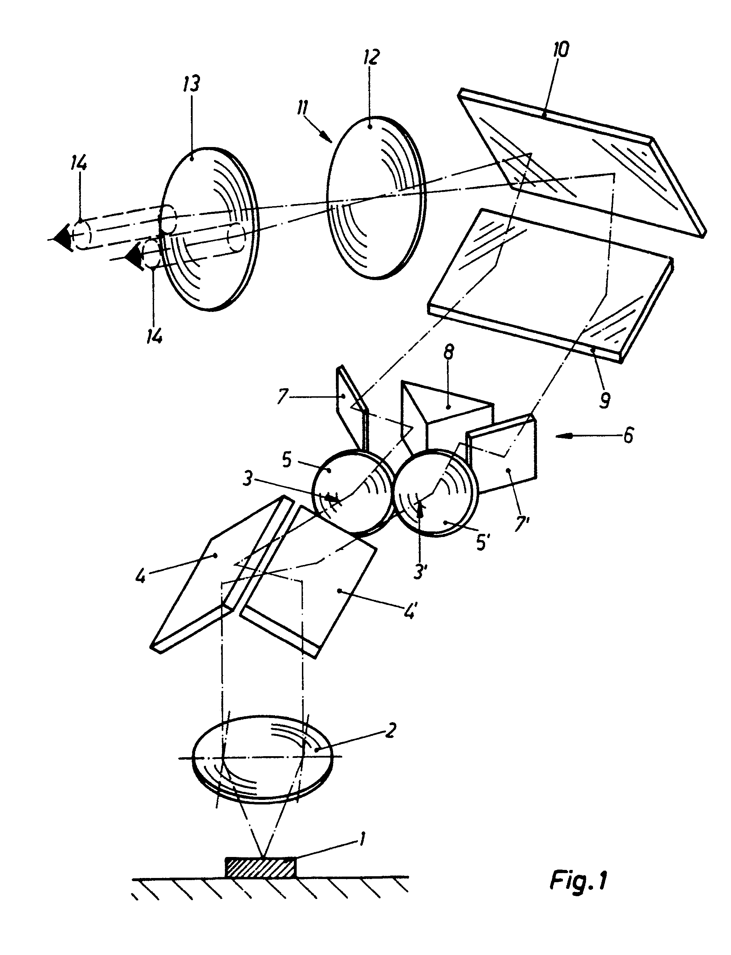

Wie in Figur 1 dargestellt befindet sich der zu beobachtende Gegenstand 1 in der Brennebene des Hauptobjektivs 2. Das Hauptobjektiv 2 muss derart dimensioniert werden, dass die Austrittspupillen am Vergrösserungsgerät grösser sind als diejenigen der Augen des Betrachters. Als Hauptobjektive können auswechselbare Fixfokussysteme oder ein variables Linsensystem eingesetzt werden. Das Bild des Gegenstandes 1 wird durch das Hauptobjektiv im Unendlichen abgebildet. Alternativ kann auch durch das Hauptobjektiv direkt eine Fokussierung der Strahlen auf die Zwischenbildebene bewirkt werden. Unmittelbar nach dem Hauptobjektiv 2 ist in dessen beidseitigem Strahlengang ein rechtwinkliges Dachkantspiegelpaar 4, 4' zur geometrischen Strahlenaufteilung angeordnet. Das Dachkantspiegelpaar hat auch die Funktion eines Bildaufrichteelementes, sodass der Betrachter den vergrösserten Gegenstand 1 in der richtigen Relativlage vor sich sieht. Die beiden parallelen Strahlenbündel 3 und 3' gelangen vom Dachkantspiegelpaar 4, 4' über ein Zwischenobjektivsystem 5, 5' auf die Spiegelvorrichtung 6. Mit dem Zwischenobjektivsystem werden die Strahlenbündel in der Zwischenbildebene 11 fokussiert.

Mittels der Spiegelvorrichtung 6 werden die beiden eintreffenden Strahlenbündel mit den optischen Achsen 3 und 3' derart konvergiert, dass sich die optischen Achsen in der Zwischenbildebene 11 schneiden und sich dann die Bilder dort überlagern. Die beiden Umlenkspiegel 9 und 10 haben nur den Zweck, den Strahlenverlauf derart zu bestimmen, dass das Gerät den praktischen Gegebenheiten angepasst werden kann.

In der Zwischenbildebene 11, wo sich die beiden Teilbilder in Überdeckung befinden, oder in deren unmittelbaren Nähe ist eine Feldlinse 12 angeordnet. Diese führt die schiefen Strahlenbüschel über die Strahlenaustrittslinse 13 den Augen zu. Die optischen Achsen 3 und 3' divergieren in Richtung der Strahlenaustrittslinse 13 und werden von dort aus parallel oder leicht divergierend getrennt den beiden Augen zugeführt. Die beiden Austrittspupillen 14 sind grösser als die grösste mögliche Pupille des Auges.

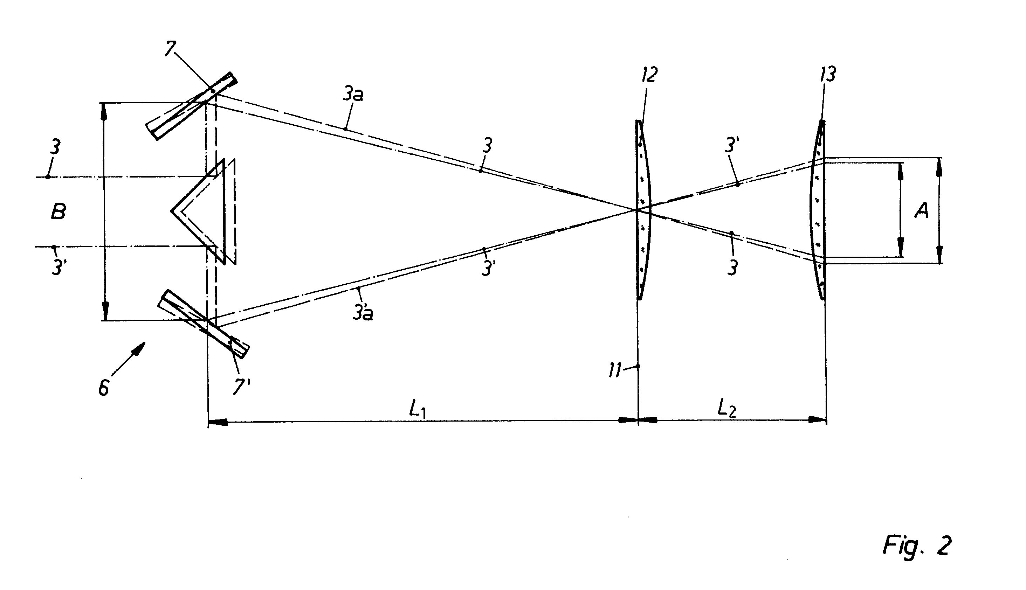

Figur 2 zeigt in schematischer Darstellung eine Draufsicht auf die beiden optischen Achsen 3 und 3' zwischen der Spiegelvorrichtung 6 und der Strahlenaustrittslinse 13. Dabei ist die Distanz B der Abstand zwischen den Reflexionspunkten der optischen Achsen auf den verschwenkbaren Spiegeln 7, 7'. In der Ebene der Strahlenaustrittslinse 13 ist die Distanz A gleich dem interpupillaren Abstand der Austrittspupillen. Die beiden optischen Achsen kreuzen sich in der Zwischenbildebene 11, wobei L1 die Distanz zwischen den Spiegeln 7, 7' und der Zwischenbildebene 11 und L2 die Distanz zwischen der Zwischenbildebene 11 und der Strahlenaustrittslinse 13 darstellt. Die Gleichung für die einzelnen Masse lautet:

$$\frac{B}{A} = \frac{L1}{L2}$$

Daraus ergibt sich für den interpupillaren Abstand:

$$A = B\frac{L2}{L1}$$

Ersichtlicherweise ist es bei dieser Gesetzmässigkeit möglich, den interpupillaren Abstand zwischen den Austrittspupillen durch justieren der Spiegelvorrichtung 6 zu verändern. Ein veränderter Pupillenabstand ist durch die optischen Achsen 3a und 3'a angedeutet.

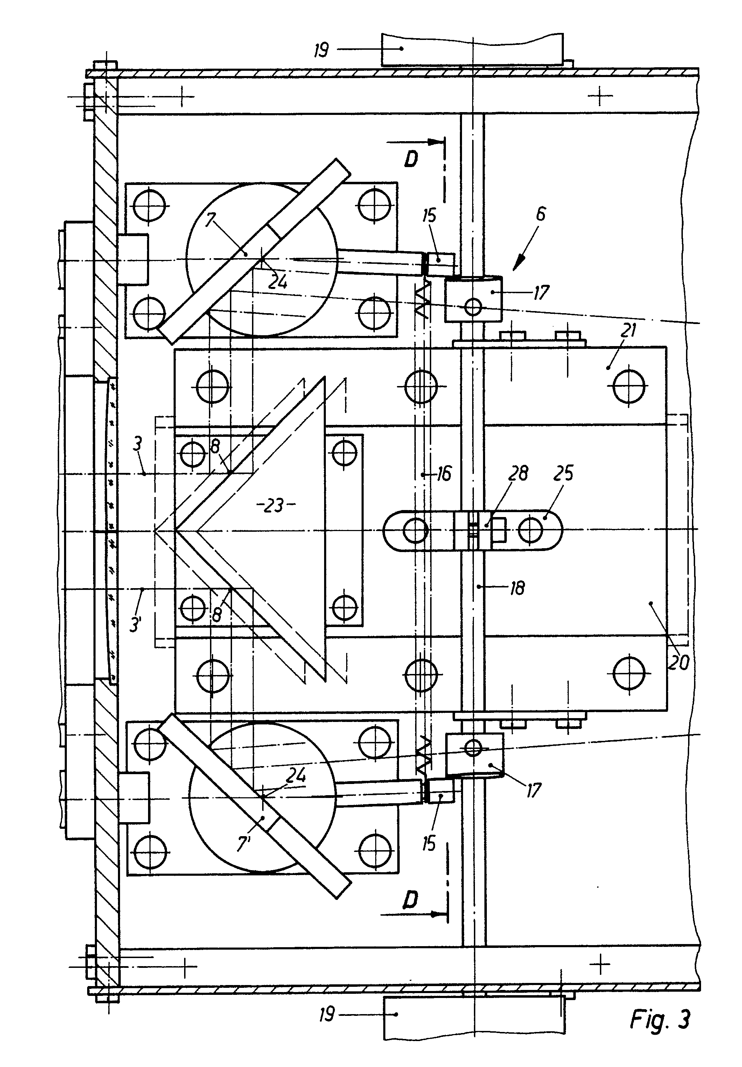

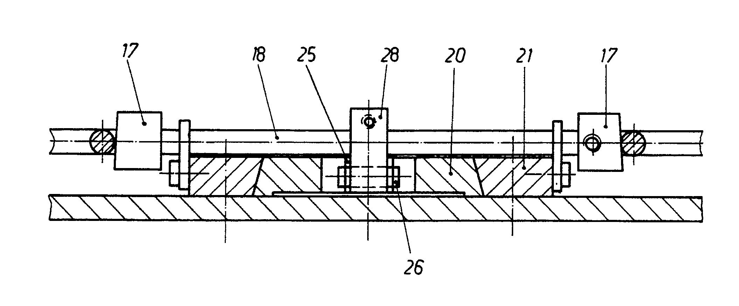

Die Justierung an der Spiegelvorrichtung 6 ist in den Figuren 3 und 4 dargestellt. Die beiden parallel auf die Spiegelvorrichtung auftreffenden optischen Achsen 3 und 3' werden von zwei festen Spiegeln 8 nach aussen abgelenkt. Die beiden festen Spiegel 8 sind die Aussenflächen eines verspiegelten Prismas 23. Auf beiden Seiten des Prismas 23 sind verschwenkbare Spiegel 7 und 7' angeordnet, mit deren Hilfe die beiden optischen Achsen 3 und 3' in der Zwischenbildebene zusammengeführt werden.

Die beiden Spiegel 7, 7' sind um eine Mittelachse 24 drehbar gelagert und mit je einem Schwenkhebel 15 verbunden. Die Enden der beiden Schwenkhebel sind über eine Zugfeder 16 miteinander verbunden. Dadurch werden die Schwenkhebel gleichzeitig an je eine Kurvenscheibe 17 angepresst, welche auf einer gemeinsamen Drehachse 18 angeordnet sind. Die Drehachse 18 führt durch die Gehäusewandung und weist dort einen Drehknopf 19 zum Drehen der Achse auf.

Beim Drehen des Drehknopfes 19 werden beide Enden der Schwenkhebel 15 ersichtlicherweise mittels der Kurvenscheiben gegeneinander oder auseinander bewegt. Dadurch ändert sich auch der Winkel der nach der Zwischenbildebene divergierenden optischen Achsen und damit der interpupillare Abstand der Austrittspupillen.

Um zu gewährleisten, dass sich die beiden optischen Achsen immer in der Zwischenbildebene schneiden, muss bei einem Verschwenken der Spiegel 7 und 7' ersichtlicherweise auch das verspiegelte Prisma 23 auf der Mittelachse zwischen den beiden verschwenkbaren Spiegeln verschoben werden. Zweckmässigerweise erfolgt dies gleichzeitig mit dem Verschwenken der Spiegel 7, 7', da sonst zwei separate Justiervorgänge erforderlich wären. Im dargestellten Ausführungsbeispiel ist das verspiegelte Prisma 23 auf einem Schlitten 20 gelagert, welcher in einer Schlittenführung 21 verschiebbar ist. Der Schlitten kann beispielsweise einen Längsschlitz 25 aufweisen in den ein Mitnehmerbolzen 26 eingesetzt ist. Eine auf der Drehachse 18 befestigte Mitnehmergabel 28 übergreift den Mitnehmerbolzen 26. Dadurch werden bei einem Drehen der Drehachse 18 nicht nur die beiden Spiegel 7 und 7' verschwenkt sondern es erfolgt auch gleichzeitig eine Verschiebung der festen Spiegel 8 bzw. des verspiegelten Prismas 23. Die Dimensionierung der einzelnen Bauteile bzw. die richtige Wahl der Länge des Hebelarms der beiden Schwenkhebel, der Ausgestaltung der Kurvenscheiben oder die richtige Verzahnung stellen für den Fachmann kein Problem dar und werden daher hier nicht näher beschrieben. Selbstverständlich sind auch andere Justiervorrichtungen denkbar, ohne dass damit der Gegenstand der Erfindung verlassen würde. So wäre es beispielsweise denkbar, dass der Schlitten 20 in der Schlittenführung 21 mit einer separaten Stellschraube verstellbar ist. Auch die beiden verschwenkbaren Spiegel könnten mit anderen Mitteln, beispielsweise über Zahnräder und gegensinnig angeordnete Schneckenräder verstellt werden. Denkbar wäre es auch, auf dem Schlitten 20 eine Zahnstange anzuordnen, welche mit einem Zahnrad auf der Drehachse in Eingriff ist.

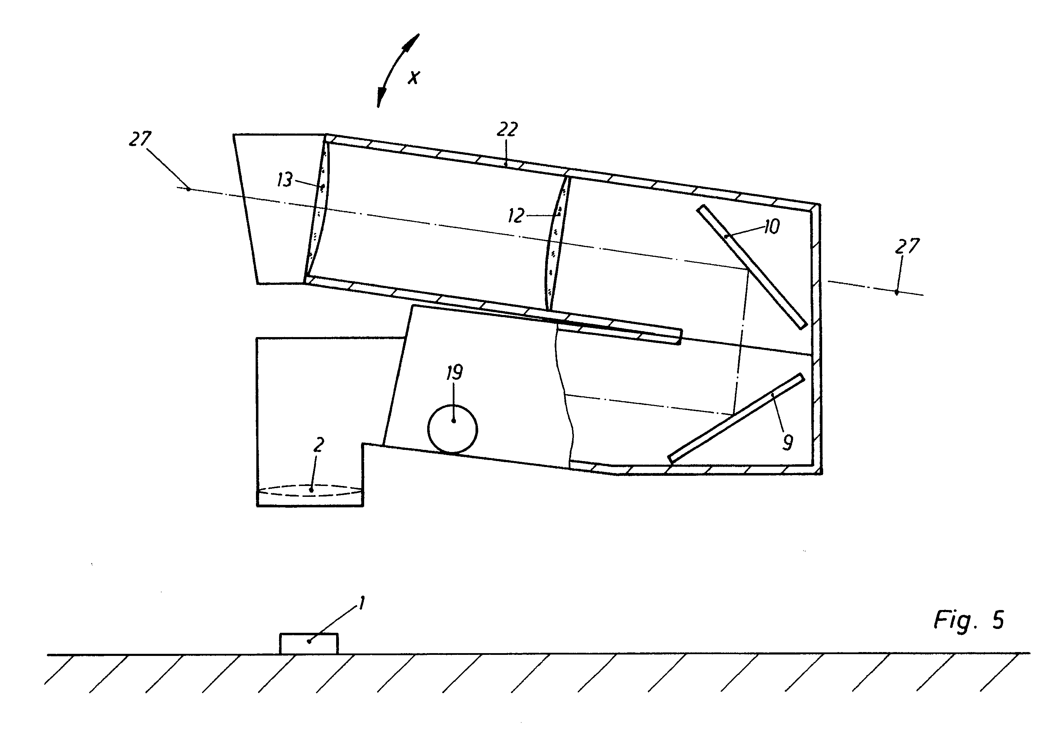

Figur 5 zeigt schliesslich eine Seitenansicht einer erfindungsgemässen Vorrichtung in stark verkleinertem Masstab und in schematischer Darstellung. Der Strahlengang wird durch den oberen Umlenkspiegel 9 und den unteren Umlenkspiegel 10 derart umgelenkt, dass das Gerät eine praktische Konfiguration aufweist. Die Strahlenaustrittslinse 13 und die Feldlinse 12 sind in einem Gehäuse 22 angeordnet, deren Längsachse 27 in Pfeilrichtung X relativ zur übrigen Vorrichtung schwenkbar ist. Dadurch kann der Betrachter je nach Sitzhöhe bzw. Relativlage der Augen das Gerät seinen individuellen Bedürfnissen anpassen. Wenigstens einer der Umlenkspiegel 9 oder 10 muss bei einem Verschwenken der Gehäuseachse ebenfalls verschwenkt werden, um eine geometrisch richtige Projektion der beiden optischen Achsen zu gewährleisten. Das Verschwenken des Umlenkspiegels erfolgt mechanisch gleichzeitig mit dem Verschwenken des Gehäuses.

Wenigstens eine Seite der Feldlinse 12 kann mit einer feinen und durchsichtigen Oberflächenstruktur versehen sein. Ohne Beeinträchtigung der Bildqualität wird damit eine geringe Streuung des Strahlengangs beim Verlassen der Feldlinse und damit eine Vergrösserung der Austrittspupillen bewirkt. Die feine Oberflächenstruktur kann beispielsweise beim Herstellen der Linse durch entsprechendeOberflächenbearbeitung des Presswerkzeuges erzielt werden. Die Oberflächenstruktur kann aber auch durch Auftragen einer Emulsion erzielt werden, z.B. indem ein klarer Lack auf die Feldlinse aufgetragen wird, der beim Trocknen eine strukturierte Oberfläche erhält.

## Ansprüche

1. Optisches Gerät zum Erzeugen eines visuellen stereoskopischen Bildes mit zwei Eintrittspupillen und mit einer Spiegelvorrichtung (6) zum Zusammenführen der zwei Strahlenbündel (3,3') auf einer Zwischenbildebene (11), in deren Bereich eine Feldlinse (12) angeordnet ist, dadurch gekennzeichnet, dass auf die Zwischenbildebene (11) ein nicht materialisiertes Luftbild projizierbar ist, dass das Luftbild durch eine Strahlenaustrittslinse (13) betrachtbar ist, dass die Spiegelvorrichtung (6) für jedes Strahlenbündel einen die Strahlenrichtung nicht verändernden festen Spiegel (8) und einen verschwenkbaren Spiegel (7, 7') aufweist, mit dem die Strahlenrichtung veränderbar ist, und dass die Spiegel der Spiegelvorrichtung zum Anpassen der Austrittspupillen (14) bei der Strahlenaustrittslinse (13) an den Augenabstand des Betrachters derart justierbar sind, dass sich die optischen Achsen der Strahlenbündel immer in der Zwischenbildebene (11) kreuzen.

2. Gerät nach Anspruch 1, dadurch gekennzeichnet, dass die beiden festen Spiegel (8) so in der Spiegelvorrichtung (6) angeordnet sind, dass die auftreffenden Strahlenbündel voneinander weg auf die beiden aussenliegenden verschwenkbaren Spiegel (7, 7') lenkbar sind und dass die festen Spiegel längs der Mittelachse zwischen den beiden verschwenkbaren Spiegeln simultan mit dem Verschwenken der verschwenkbaren Spiegel verschiebbar sind.

3. Gerät nach Anspruch 2, dadurch gekennzeichnet, dass die beiden verschwenkbaren Spiegel (7, 7') je einen Schwenkhebel (15) aufweisen, der an einer Kurvenscheibe (17) anliegt und dass jeder Schwenkhebel mit einer Feder an die Kurvenscheibe anpressbar ist.

4. Gerät nach Anspruch 3, dadurch gekennzeichnet, dass die beiden Kurvenscheiben (17) auf einer gemeinsamen Drehachse (18) liegen und dass die beiden Schwenkhebel (15, 15') mit einer Zugfeder (16) verbunden bzw. gegen die Kurvenscheiben pressbar sind.

5. Gerät nach Anspruch 4, dadurch gekennzeichnet, dass die festen Spiegel (8) auf einem Schlitten (20) angeordnet sind, der mittels der Drehachse (18) verschiebbar ist.

6. Gerät nach einem der Ansprüche 2 bis 5, dadurch gekennzeichnet, dass die festen Spiegel (8) durch die verspiegelten Aussenseiten eines Prismas (23) gebildet werden.

7. Gerät nach einem der Ansprüche 1 bis 6, dadurch gekennzeichnet, dass die Pupillenaufteilung über ein Dachkantspiegelpaar (4, 4') erfolgt, welches Strahlen von einem Hauptobjektiv (2) empfängt, wobei das Dachkantspiegelpaar zwei getrennte Strahlenbündel auf die Spiegelvorrichtung (6) wirft und gleichzeitig als Bildaufrichteelement wirkt.

8. Gerät nach Anspruch 7, dadurch gekennzeichnet, dass zwischen dem Dachkantspiegelpaar und der Spiegelvorrichtung ein Zwischenobjektivsystem (5, 5') angeordnet ist, mit dem die Strahlenbündel in der Zwischenbildebene (11) fokussierbar sind.

9. Gerät nach Anspruch 8, dadurch gekennzeichnet, dass die Strahlenaustrittslinse (13) und die Feldlinse (12) in einem Gehäuse (22) angeordnet sind, dessen Längsachse verschwenkbar ist und dass in den Strahlenbündeln zwischen der Spiegelvorrichtung (6) und der Feldlinse (12) wenigstens ein schwenkbarer Spiegel vorgesehen ist.

10. Gerät nach einem der Ansprüche 1 bis 9, dadurch gekennzeichnet,dass wenigstens eine Seite der Feldlinse eine feine und durchsichtige Oberflächenstruktur aufweist.

11. Gerät nach Anspruch 10, dadurch gekennzeichnet, dass die Oberflächenstruktur durch eine auf die Feldlinse aufgetragene Emulsion gebildet ist.

## Claims

1. An optical apparatus for producing a visual stereoscopic image having two entrance pupils and a mirror arrangement (6) for bringing the two beans (3, 3') together on an intermediate image plane (11), in the region of which is disposed a field lens (12), characterised in that a non-materialised aerial image can be projected on to the intermediate image plane (11), that the aerial image can be viewed through a beam exit lens (13), that the mirror arrangement (6) has for each beam a fixed mirror (8) which does not vary the beam direction and a pivotable mirror (7, 7') with which the beam direction can be varied, and that the mirrors of the mirror arrangement are adjustable for adaptation of the exit pupils (14) at the beam exit lens (13) to the spacing of the eyes of the viewer in such a way that the optical axes of the beams always intersect in the intermediate image plane (11).

2. Apparatus according to claim 1 characterised in that the two fixed mirrors (8) are so arranged in the mirror arrangement (6) that the beams impinging thereon can be diverted away from each other on to the two outwardly disposed pivotable mirrors (7, 7') and that the fixed mirrors are displaceable along the centre line between the two pivotable mirrors simultaneously with the pivotal movement of the pivotable mirrors.

3. Apparatus according to claim 2 characterised in that the two pivotable mirrors (7, 7') each have a pivot lever (15) which bears against a cam disc (17) and that each pivot lever can be pressed against the cam disc by means of a spring.

4. Apparatus according to claim 3 characterised in that the two cam discs (17) are disposed on a common rotary spindle (18) and that the two pivot levers (15), 15') are connected to a tension spring (16) and can be pressed against the cam discs.

5. Apparatus according to claim 4 characterised in that the fixed mirrors (8) are disposed on a carriage (20) which is displaceable by means of the rotary spindle (18).

6. Apparatus according to one of claims 2 to 5 characterised in that the fixed mirrors (8) are formed by the mirrored outward sides of a prism (23).

7. Apparatus according to one of claims 1 to 6 characterised in that pupil division is effected by way of a pair of roof edge mirrors (4, 4') which receives beams from a main objective lens (2), wherein the pair of roof edge mirrors projects two separate beams on to the mirror arrangement (6) and acts at the same time as an image erecting element.

8. Apparatus according to claim 7 characterised in that disposed between the pair of roof edge mirrors and the mirror arrangement is an intermediate lens system (5, 5') with which the beams can be focussed in the intermediate image plane (11).

9. Apparatus according to claim 8 characterised in that the beam exit lens (13) and the field lens (12) are arranged in a housing (22) whose longitudinal axis is pivotable and at least one pivotable mirror is provided in the beams between the mirror arrangement (6) and the field lens (12).

10. Apparatus according to one of claims 1 to 9 characterised in that at least one side of the field lens has a fine and transparent surface structure.

11. Apparatus according to claim 10 characterised in that the surface structure is formed by an emulsion applied to the field lens.

## Revendications

1. Appareil optique pour produire une image visuelle stéréoscopique, comportant deux pupilles d'entrée et un dispositif de miroirs (6) pour concentrer les deux faisceaux lumineux (3, 3') sur un plan (11) de l'image intermédiaire dans la zone duquel est disposée une lentille de champ (12), caractérisé en ce qu'une image aérienne non matérialisée peut être projetée sur le plan (11) de l'image intermédiaire, en ce que l'image aérienne peut être observée grâce à une lentille de sortie de rayons lumineux (13), en ce que le dispositif de miroirs (6) comporte pour chaque faisceau lumineux un miroir fixe (8) qui ne modifie pas la direction des rayons lumineux et un miroir orientable (7, 7') à l'aide duquel la direction des rayons lumineux peut être modifiée, et en ce que les miroirs du dispositif de miroirs peuvent être ajustés pour adapter les pupilles de sortie (14) situées près de la lentille de sortie de rayons lumineux (13) à l'écartement des yeux de l'utilisateur, de façon que les axes optiques des faisceaux lumineux se croisent toujours dans le plan (11) de l'image intermédiaire.

2. Appareil selon la revendication 1, caractérisé en ce que les deux miroirs fixes (8) sont disposés dans le dispositif de miroirs (6) de telle façon que les faisceaux lumineux qui arrivent peuvent être déviés à distance l'un de l'autre sur les deux miroirs orientables (7, 7') situés à l'extérieur, et en ce que les miroirs fixes peuvent être déplacés le long de l'axe médian, entre les deux miroirs orientables, simultanément au pivotement des miroirs orientables.

3. Appareil selon la revendication 2, caractérisé en ce que les deux miroirs orientables (7, 7') comportent respectivement un levier pivotant (15) en appui contre un disque à came (17), et en ce que chacun des leviers pivotants est pressé contre le disque à came à l'aide d'un ressort.

4. Appareil selon la revendication 3, caractérisé en ce que les deux disques à came (17) se trouvent sur un axe de rotation commun (8), et en ce que les deux leviers pivotants (15, 15') sont reliés à un ressort de traction 16, respectivement sont pressés contre les disques à came.

5. Appareil selon la revendication 4, caractérisé en ce que les miroirs fixes (8) sont montés sur un chariot (20) qui peut être déplacé au moyen de l'axe de rotation (18).

6. Appareil selon l'une des revendications 2 à 5, caractérisé en ce que les miroirs fixes (8) sont formés par les faces extérieures métallisées d'un prisme (23).

7. Appareil selon l'une des revendications 1 à 6, caractérisé en ce que la répartition pupillaire se fait par l'intermédiaire de deux miroirs (4, 4') disposés suivant une configuration en forme de toit, qui reçoivent des rayons lumineux d'un objectif principal (2), les deux miroirs disposés suivant une configuration en forme de toit projetant deux faisceaux lumineux séparés sur le dispositif de miroirs (6) et faisant en même temps fonction d'élément de redressement d'image.

8. Appareil selon la revendication 7, caractérisé en ce qu'entre les deux miroirs disposés suivant une configuration en forme de toit et le dispositif de miroirs, il est prévu un système d'objectif intermédiaire (5, 5') au moyen duquel les faisceaux lumineux sont focalisés dans le plan (11) de l'image intermédiaire.

9. Appareil selon la revendication 8, caractérisé en ce que la lentille de sortie de rayons lumineux (13) et la lentille de champ (12) sont disposées dans un boîtier (22) dont l'axe longitudinal est apte à pivoter, et en ce que dans les faisceaux lumineux entre le dispositif de miroirs (6) et la lentille de champ (12), il est prévu au moins un miroir orientable.

10. Appareil selon l'une des revendications 1 à 9, caractérisé en ce que l'une au moins des faces de la lentille de champ, présente une structure de surface de précision et transparente.

11. Appareil selon la revendication 10, caractérisé en ce que la structure de surface est formée par une émulsion appliquée sur la lentille de champ.

Fig.1

Fig. 2

*Fig. 3*

Fig. 4

Fig. 5